# EUROPÄISCHE PATENTSCHRIFT

(11) **EP 0 415 419 B1**
(45) Veröffentlichungstag und Bekanntmachung des Hinweises auf die Patenterteilung: **21.12.1994**
(21) Anmeldenummer: 90116672.8
(22) Anmeldetag: 30.08.1990
(51) Int. Cl.: A01F 12/40

(54) **Häcksler**
Chopper
Hachoir

(30) Priorität: 01.09.1989 DE 3929098
(43) Veröffentlichungstag der Anmeldung: 06.03.1991
(60) Teilanmeldung: 91118194.9
(73) Patentinhaber: BISO B.V., NL-4707 BX Roosendaal (NL)
(72) Erfinder: Scharf, Alois, D-4520 Melle 8 (DE)
(74) Vertreter: Zinnecker, Armin, Dipl.-Ing.

(56) Entgegenhaltungen:
- EP-A- 0 331 784
- DE-A- 3 823 116
- DE-C- 834 463
- DE-C- 862 383
- DE-C- 877 070
- GB-A- 2 116 834
- US-A- 2 842 175

## Beschreibung

Die Erfindung betrifft einen Häcksler, insbesondere einen Anbauhäcksler für Mähdrescher, nach dem Oberbegriff des Anspruchs 1.

Ein derartiger Häcksler ist aus der DE-GM 88 10 123 bekannt. Er dient dazu, Halmgut, insbesondere Stroh oder ähnliches, zu häckseln.

Bei diesem Häckslern kann es vorkommen, daß ein Halm in der durch die Häckslerrotation erzeugten Luftströmung längs dieser gefördert wird. Halmrichtung und Strömungsrichtung stimmen also im wesentlichen überein. Der betreffende Halm wird dann nicht oder nicht vollständig gehäckselt.

Aus der GB-A-2 116 834 ist ein Strohhäcksler bekannt, der zur Zerkleinerung von Ballen dient. Die rotierenden Messer weisen auch an ihrer Stirnseite eine Schneide auf.

Aufgabe der Erfindung ist es, bei einem Häcksler der eingangs angegeben Art die Häckselwirkung zu verbessern.

Erfindungsgemäß wird diese Aufgabe dadurch gelöst, daß die Messer auch an ihrer Stirnseite schneidenförmig gestaltet sind, wobei die Messer an der Stirnseite gezahnt sind. Überraschend hat sich gezeigt, daß durch die an der Stirnseite gezahnten Messer auch solche Halme erfaßt und gehäckselt werden, die parallel zur Strömungsrichtung gefördert werden, und daß weiterhin die Halme bereits beim Eindringen in den Messerkreis erfaßt und aufgerissen werden.

Die Häckselwirkung kann dadurch noch erheblich verbessert werden, daß nach einer vorteilhaften Weiterbildung der Erfindung an dem Führungsblech in Trommel-Drehrichtung hinter den Gegenmessern mindestens eine nach innen weisende Leiste vorgesehen ist. Diese Leiste bildet ein Hindernis für die Halme, so daß auch längs und parallel zur Strömungsrichtung geförderte Halme abgelenkt, erfaßt und gehäckselt werden. Die Schneiden an den Messer-Stirnseiten wirken sich hier für den Häckselvorgang nochmals vorteilhaft aus.

Vorzugsweise ist im Abstand von der ersten Leiste eine weitere Leiste vorgesehen. Die Leisten können aus einem Winkelprofil oder aus einem anderen Längsprofil, beispielsweise einem geraden Profil, bestehen. Vorzugsweise sind die Leisten zustellbar, also in Richtung auf die Trommel-Drehachse zu und von dieser weg verstellbar und feststellbar. Hierdurch kann der Abstand der Leisten und insbesondere deren der Trommel zugewandten Enden einjustiert und optimiert werden.

Nach einer vorteilhaften Weiterbildung enden die Leisten in einem geringen Abstand vom Messerkreis. Hierdurch wird gewährleistet, daß alle Halme und insbesondere auch dünne Halme erfaßt und gehäckselt werden.

Nach einer weiteren vorteilhaften Weiterbildung ragen die Leisten in den Messerkreis hinein und weisen sie bei den Rotationsebenen der Messer Ausnehmungen auf. Hierdurch wird eine besonders gute Ablenkungswirkung erzielt. Es wird gewährleistet, daß alle Halme in den Messerkreis hinein gefördert und dort erfaßt und gehäckselt werden. Die von der Leiste abgebremsten Halme werden durch das nachrutschende Häckselgut quergerichtet und von den Messern zuverlässig erfaßt. Damit trotzdem die Trommel rotieren kann, müssen an den Stellen, an denen die Rotationsebenen der Messer die Leisten schneiden, entsprechende Ausnehmungen für die Messer vorgesehen werden.

Die Zähne der an der Stirnseite gezahnt en Messer können symmetrisch ausgestaltet sein. Nach einer vorteilhaften Weiterbildung sind die Zähne unsymmetrisch geschliffen bzw. gestaltet; die Kanten der Zähne verlaufen also in verschiedenem Winkel zur Messer-Längsachse. Vorzugsweise ist aber der Winkel der vorlaufenden Kanten der Zähne größer als der Winkel der nachlaufenden Kanten. Vorteilhaft ist, wenn die nachlaufenden Kanten parallel zur Messer-Längsachse verlaufen. Die Halme werden dann besonders zuverlässig und wirkungsvoll von den nachlaufenden Kanten der Zähne erfaßt und gehäckselt.

Nach einer weiteren vorteilhaften Weiterbildung sind die Zähne symmetrisch zur Messer-Längsachse angeordnet und ist der Winkel der inneren Kanten der Zähne zur Messer-Längsachse größer als der Winkel der äußeren Kanten. Die Halme werden dann von der nachlaufenden Kante des nachlaufenden Zahnes zuverlässig und wirkungsvoll erfaßt. Weiterhin kann das Messer nach einem gewissen Verschleiß umgedreht werden, so daß dann die bisher vorlaufende Kante die nachlaufende Kante bildet. Dies führt zu einer Vereinfachung bei der Wartung und zu einer Verdoppelung der Schleifintervalle.

An den Stirnseiten der Messer können halbmondförmige Ausnehmungen eingeschliffen sein.

Die Leiste bzw. die Leisten können verzahnt sein, um die Häckselwirkung weiter zu verbessern.

Vorzugsweise sind die Leiste bzw. die Leisten schwenkbar. Vorteilhaft ist es, wenn die Leisten in der jeweiligen Schwenklage feststellbar sind.

Die Leiste bzw. die Leisten können aus einem das Führungsblech durchsetzenden T-Profil bestehen. Die Leisten haben also die Form eines T-Profils, so daß durch die in den Schneidraum hineinragenden Leisten Stroh gerichtet und zerkleinert werden kann. Durch Umdrehen des T- Profils deckt der Flansch den Durchbruch im Führungsblech ab.

Vorteilhaft ist es, wenn das Führungsblech in Trommel-Drehrichtung hinter den Gegenmessern schwenkbar angeordnet ist. Das Führungsblech kann vorzugsweise in beliebigen Stellungen arretiert werden. Eine weitere vorteilhafte Weiterbildung ist dadurch gekennzeichnet, daß das Führungsblech in Trommel-Drehrichtung hinter den Gegenmessern und vor der Leiste radial nach innen verläuft, so daß das Häckselgut der Leiste und den Messern wieder zugeführt wird.

Ausführungsbeispiele der Erfindung werden nachstehend anhand der Zeichnungen im einzelnen erläutert. In diesen zeigt
- Fig.1: einen Häcksler in einer Seitenansicht,
- Fig.2: den in Fig.1 dargestellten Häcksler in einer Schnittansicht,
- Fig.3: ein zweites Ausführungsbeispiel eines Häckslers in einer Seitenansicht,
- Fig.4: den in Figur 3 dargestellten Häcksler in einer Schnittansicht,
- Fig.5: ein drittes Ausführungbeispiel eines Häckslers in einer Seitenansicht,
- Fig.6: den in Fig.5 dargestellten Häcksler in einer Schnittansicht,
- Fig.7: ein stirnseitig gerade geschliffenes Messer in einer Draufsicht,
- Fig.8: einen Schnitt durch das in Fig.7 dargestellte Messer,
- Fig.9: einen Einzelheit des in Fig.7 dargestellten Messers in einer vergrößerten Ansicht,
- Fig.10: einen Schnitt durch die Einzelheit der Fig.9,
- Fig.11: ein stirnseitig gezahntes Messer in einer Draufsicht,
- Fig.12: einen Schnitt durch das Messer der Fig.11,
- Fig. 13: eine vergrößerte Einzelheit des Messers gemäß Fig. 11,
- Fig.14: einen Schnitt durch die Einzelheit gemäß Fig.13,
- Fig.15: ein rundgeschliffenes und unsymmetrisch gezahntes Messer in einer Draufsicht,
- Fig.16: einen Schnitt durch das Messer gemäß Fig.15,
- Fig.17: eine vergrößerte Einzelheit des in Fig.15 dargestellten Messers,
- Fig.18: einen Schnitt durch die Einzelheit gemäß Fig.17,
- Fig.19: ein Messer mit stirnseitig eingeschliffenen, halbmondförmigen Ausnehmungen in einer Draufsicht,
- Fig.20: einen Schnitt durch das Messer gemäß Fig.19,
- Fig.21: eine vergrößerte Einzelheit des in Fig.19 dargestellten Messers,
- Fig.22: einen Schnitt längs der Linie B-B in Fig.21,
- Fig.23: einen Schnitt längs der Linie C-C in Fig.21,
- Fig.24: ein weiteres Ausführungsbeispiel in einer Seitenansicht,
- Fig.25: das in Fig. 24 dargestellte Ausführungsbeispiel in einer Schnittansicht,
- Fig.26: ein weiteres Ausführungsbeispiel in einer Seitenansicht,
- Fig.27: das in Fig. 26 dargestellte Ausführungsbeispiel in einer Schnittansicht,
- Fig.28: ein weiteres Ausführungsbeispiel in einer Seitenansicht,
- Fig.29: das in Fig. 28 dargestellte Ausführungsbeispiel in einer Schnittansicht,
- Fig.30: ein weiteres Ausführungsbeispiel in einer Seitenansicht,
- Fig.31: das in Fig. 30 dargestellte Ausführungsbeispiel in einer Schnittansicht,
- Fig.32: ein weiteres Ausführungsbeispiel in einer Seitenansicht,
- Fig.33: das in Fig. 32 dargestellte Ausführungsbeispiel in einer Schnittansicht,
- Fig.34: ein weiteres Ausführungsbeispiel in einer Seitenansicht und
- Fig.35: das in Fig. 34 dargestellte Ausführungsbeispiel in einer Schnittansicht.

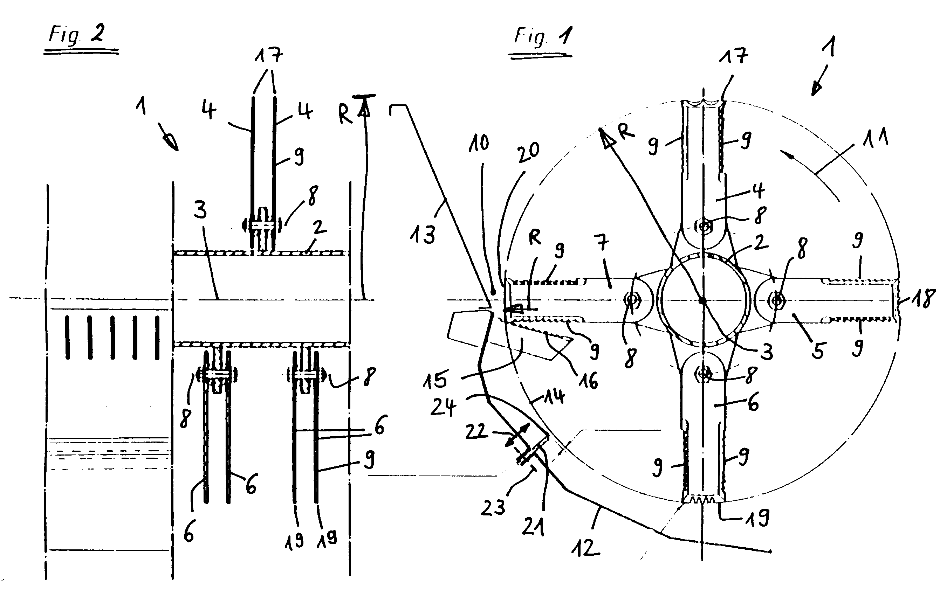

Der in den Figuren 1 und 2 gezeigte Häcksler besitzt eine Trommel 1 mit einer Messerwelle 2, die um eine im wesentlichen horizontale Achse 3 rotiert. Am Umfang der Messerwelle 2 ist eine Vielzahl von Messern 4,5,6,7 schwenkbar angeordnet. Die Messer-Schwenkachsen 8 verlaufen parallel zur Trommel-Drehachse 3. Die Messer weisen an ihren Längsseiten 9 Schneiden auf. Die Herstellung der Schneiden erfolgt durch Schleifen; es sind aber auch andere Herstellungsweisen möglich. Der Häcksler 1 besitzt weiter eine Einzugsöffnung 10 und ein in Trommel-Drehrichtung 11 daran anschließendes Führungsblech 12. Das Stroh wird in die Einzugsöffnung 10 durch ein Zuführblech 13 eingeführt. Die Einzugsöffnung 10 wird also vom Ende dieses Zuführblechs 13 gebildet. Das Führungsblech 12 verläuft im wesentlichen parallel und im Abstand vom Messer-Umlaufkreis 14. In Trommel-Drehrichtung 11 sind hinter der Einzugsöffnung 10 feststehende Gegenmesser 15 angeordnet. Die Gegenmesser 15 sind an dem Führungsblech 12 befestigt. Sie ragen in den Messerkreis 14 hinein und sind an ihrer Oberseite, also in der der Trommel-Drehrichtung 11 zugewandten Seite mit Zähnen 16 versehen. Das Führungsblech 12 erstreckt sich über einen Winkel von etwa 90 Grad um die Trommel-Drehachse 3.

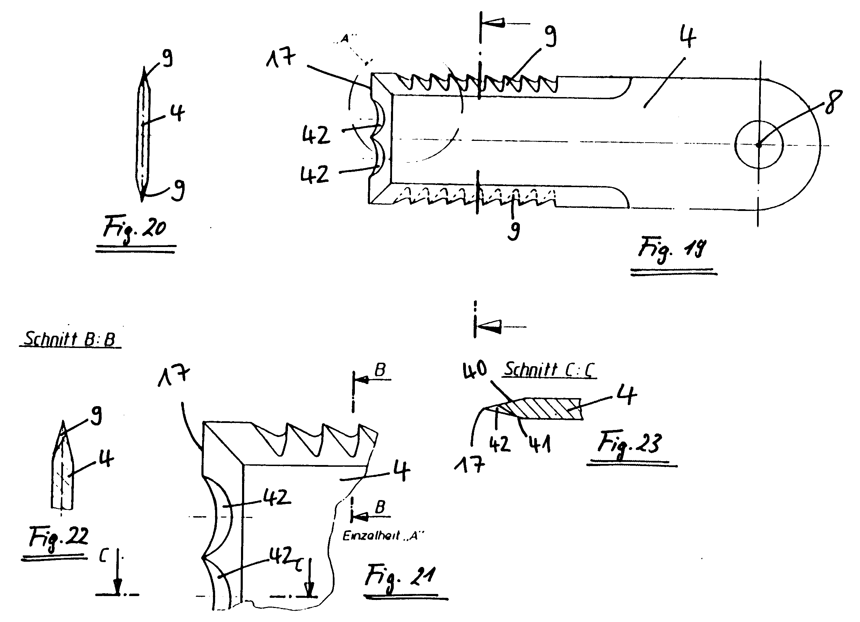

Die Messer 4,5,6,7 sind auch an ihrer jeweiligen Stirnseite 17,18,19,20 schneidenförmig gestaltet. Die Gestaltung der Schneiden erfolgt durch Schleifen; es sind aber auch andere Herstellungsweisen möglich. In der Fig.1 sind vier verschiedene Messer 4,5,6,7 gezeigt. In der praktischen Ausführung werden allerdings immer dieselben Messer für einen Häcksler verwendet; lediglich aus Gründen der zeichnerischen Darstellung sind also vier verschiedene Messer in der Figur 1 gezeigt. Bei dem Messer 4 sind an der Stirnseite 17 halbmondförmige Ausnehmungen eingeschliffen (vgl. Figuren 19-23). Das Messer 5 ist an seiner Stirnseite 18 gezahnt, wobei die Zähne unsymmetrisch ausgestaltet sind (vgl. Figuren 11-14). Auch das Messer 6 ist an seiner Stirnseite 19 gezahnt (vgl. Figuren 15-18). Das Messer 7 weist an seiner Stirnseite 20 eine glatte Schneide auf (vgl. Figuren 7-10). Das Messer 6 weist an seiner Stirnseite eine runde Schneide auf, die anderen Messer 4,5 und 7 weisen an der Stirnseite eine gerade Schneide auf. Der Radius R der runden Schneide ist derselbe wie der Messertrommel-Radius R.

An dem Führungsblech 12 ist in Trommel-Drehrichtung 11 hinter den Gegenmessern 15 eine nach innen weisende Leiste 21 vorgesehen. Die Leiste 21 besteht aus einem Längsprofil bzw. geraden Profil. Sie ist zustellbar, also in Richtung des Doppelpfeils 22 zur Trommel-Drehachse 3 hin und von dieser weg verstellbar und feststellbar, beispielsweise durch eine Langloch-Schraubenverbindung 23. Die Leiste 21 bzw. deren der Messertrommel 1 zugewandtes Ende 24 endet in einem geringen Abstand vom Messerkreis 14, der in dem Ausführungsbeispiel der Fig.1 1mm bis 10 mm beträgt. Das Ende 24 der Leiste 21 ist schräg angeschliffen, und zwar derart, daß der geringste Abstand zwischen dem Ende 24 der Leiste 21 und dem Messerkreis 14 auf der der Trommel-Drehrichtung 11 zugewandten Seite der Leiste 21 liegt.

Durch die Rotation der Messer wird eine Luftströmung erzeugt, die im wesentlichen der Rotationsrichtung 11 der Trommel 1 entspricht. Wenn ein Halm längs und parallel zu dieser Strömungsrichtung gefördert wird, wird er durch den stirnseitigen Anschliff der Messer zuverlässig erfaßt und gehäckselt. Diese Häckselwirkung wird ganz erheblich verbessert und verstärkt durch die Leiste 21.

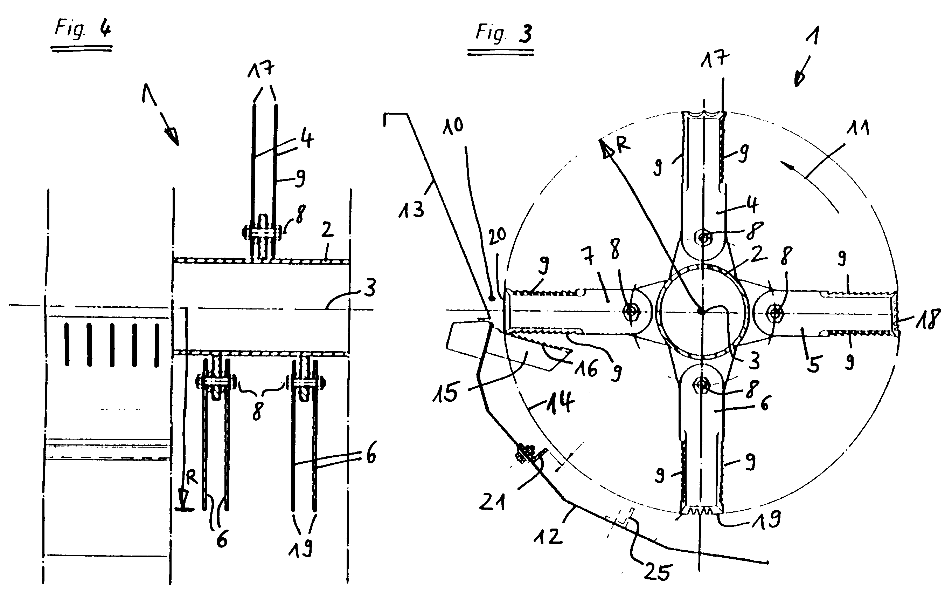

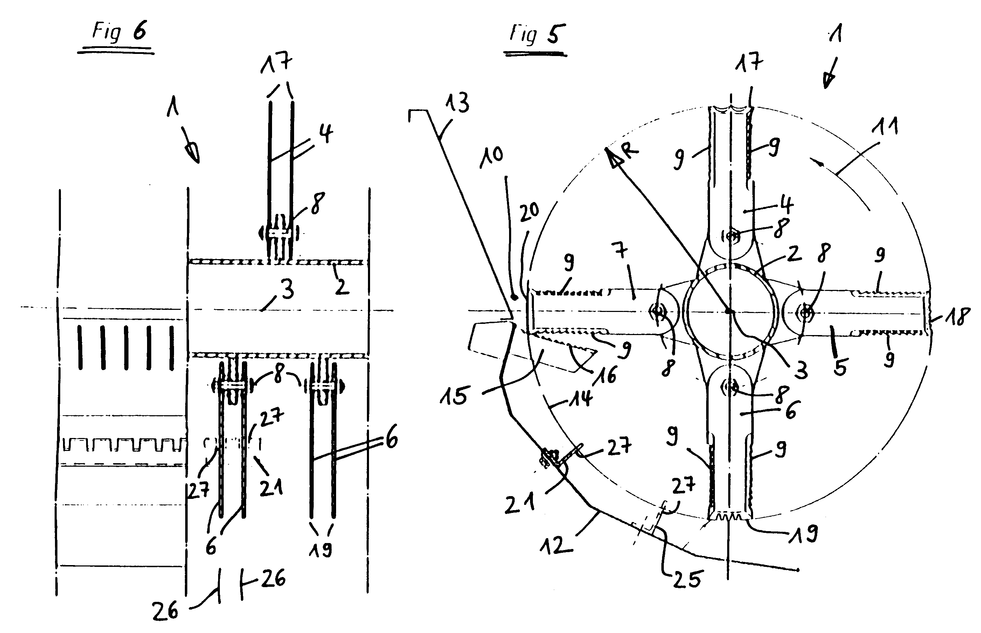

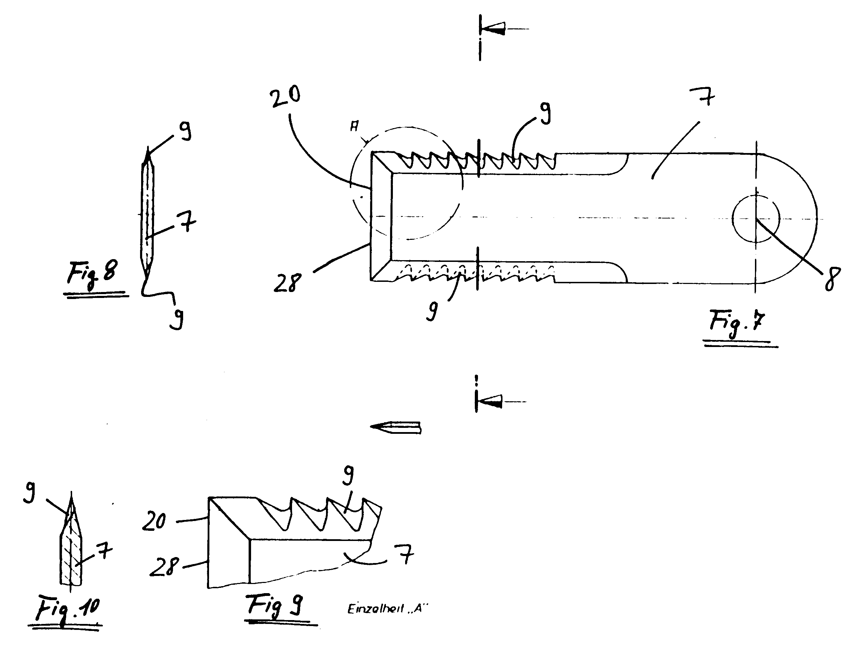

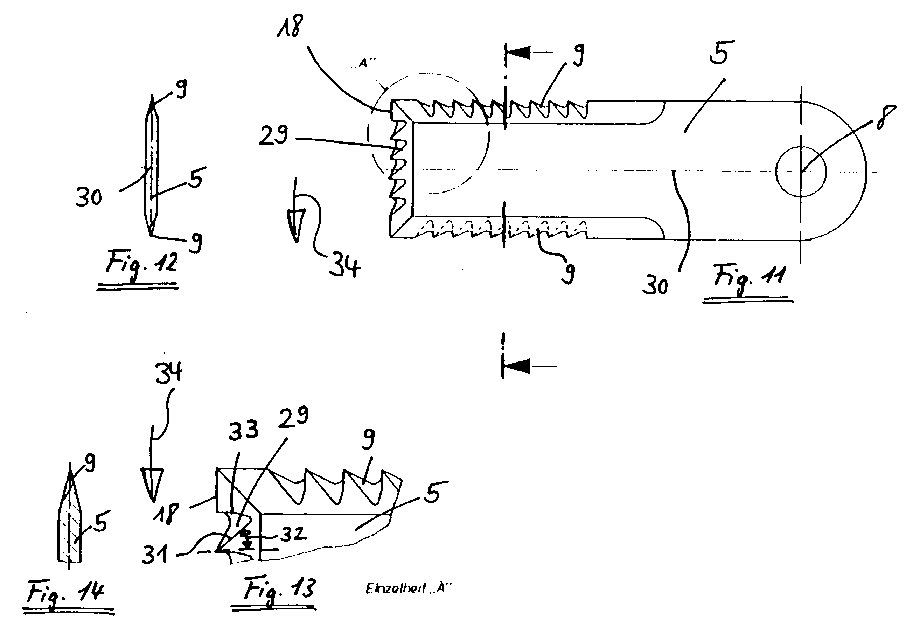

Die Figuren 3 und 4 zeigen ein weiteres Ausführungsbeispiel, bei dem gleiche Teile mit gleichen Bezugszeichen versehen sind. Im Unterschied zur Ausführungsform der Figuren 1 und 2 besteht die Leiste 21 aus einem Winkelprofil. Im Abstand von der ersten Leiste 21 ist in Trommel-Drehrichtung 11 eine zweite Leiste 25 vorgesehen, die ebenfalls als Winkelprofil ausgebildet ist und die die Häckselwirkung noch zusätzlich verbessert.

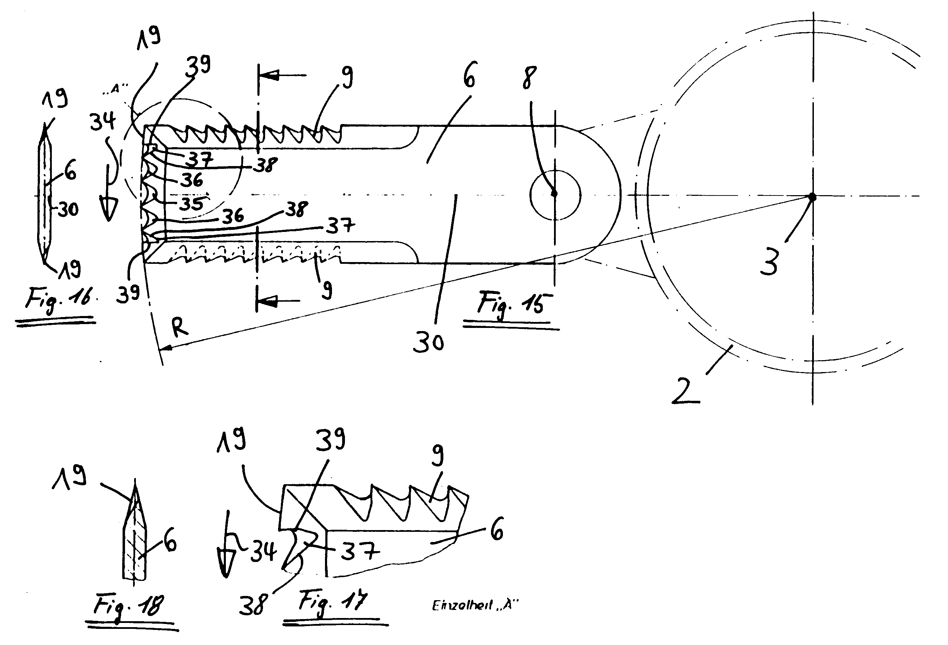

Die Figuren 5 und 6 zeigen eine weitere Ausführungsform, bei der die Leisten 21,25 in den Meserkreis 14 hineinragen. Bei den Rotationsebenen 26 der Messer sind entsprechende Ausnehmungen 27 in den Leisten 21,25 vorgesehen.

Die Figuren 7 bis 10 zeigen ein Messer 7, das an seiner Stirnseite 20 eine gerade Schneide aufweist. Die Vorderkante 28 des Messers verläuft also in einer geraden Linie.

In den Figuren 11 bis 14 ist ein Messer 5 gezeigt, das ebenfalls an der Stirnseite 18 eine gerade Schneide aufweist. Weiterhin ist das Messer 5 an der Stirnseite gezahnt, wobei die Kanten der Zähne 29 in verschiedenem Winkel zur Messer-Längsachse 30 verlaufen. Der Winkel 32 zwischen der vorlaufenden Kante 31 und der Messer-Längsachse 30 ist größer als der Winkel zwischen der nachlaufenden Kante 33 und der Messer-Längsachse 30. Unter der "vorlaufenden Kante" 31 wird dabei die in Messer-Bewegungsrichtung 34 vorlaufende Kante verstanden. Durch den soeben beschriebenen, unsymmetrischen Anschliff der Zähne werden die Halme besonders zuverlässig und wirkungsvoll ergriffen und gehäckselt und wird ein Zusetzen der Verzahnung mit Häckselgut vermieden (Selbstreinigungs-Effekt). Die nachlaufenden Kanten 33 der Zähne 29 verlaufen, wie aus Figur 13 ersichtlich, parallel zur Messer-Längsachse 30.

Die Figuren 15 bis 18 zeigen ein Messer 6, dessen Stirnseite 19 eine runde Schneide aufweist. Der Radius R der runden Schneide der Stirnseite des Messers 6 ist genauso groß wie der Radius R der Trommel 1, also der Radius R des Messerkreises 14. Auch das Messer 6 ist an der Stirnseite 19 gezahnt. Die Form der Zähne ist allerdings verschieden. Der mittlere Zahn 35, der auf der Messer-Längsachse 30 liegt, ist symmetrisch ausgestaltet. Die beiden daran anschließenden Zähne 36 sind in sich unsymmetrisch, jedoch spiegelbildlich zur Messer-Längsachse 30. Die Anordnung ist derart getroffen, daß die Zähne symmetrisch zur Messer-Längsachse angeordnet sind und daß der Winkel der inneren Kanten der Zähne zur Messer-Längsachse größer ist als der Winkel der äußeren Kanten. Besonders deutlich wird dies bei den äußeren Zähnen 37. Dort ist der Winkel der inneren Kanten 38 größer als der Winkel der äußeren Kanten 39. Bei einer Bewegung des Messers 6 in Richtung des Pfeiles 34 werden die Halme von den in der Darstellung der Figur 15 über der Messer-Längsachse 30 liegenden Zähnen wirkungsvoll mitgenommen. Wenn das Messer stumpf geworden ist, kann es um die Messer-Längsachse 30 um 180 Grad gedreht werden, so daß die zunächst in Bewegungsrichtung hinten liegenden Zähne jetzt in Bewegungsrichtung vorne liegen. Die noch scharfen Kanten treten dann an die Stelle der bereits stumpf gewordenen Kanten. Hierdurch können die Schleifintervalle verdoppelt werden. Dasselbe gilt natürlich für den Anschliff 9 an den Längsseiten des Messers.

Die Figuren 19 bis 23 zeigen ein Messer 4, das an seiner Stirnseite 17 eine gerade Schneide aufweist. Die Schneide besteht aus zwei spitz zulaufenden Ebenen 40,41, wie aus Figur 23 ersichtlich. Weiterhin sind an der Stirnseite des Messers 4 halbmondförmige Ausnehmungen 42 eingeschliffen.

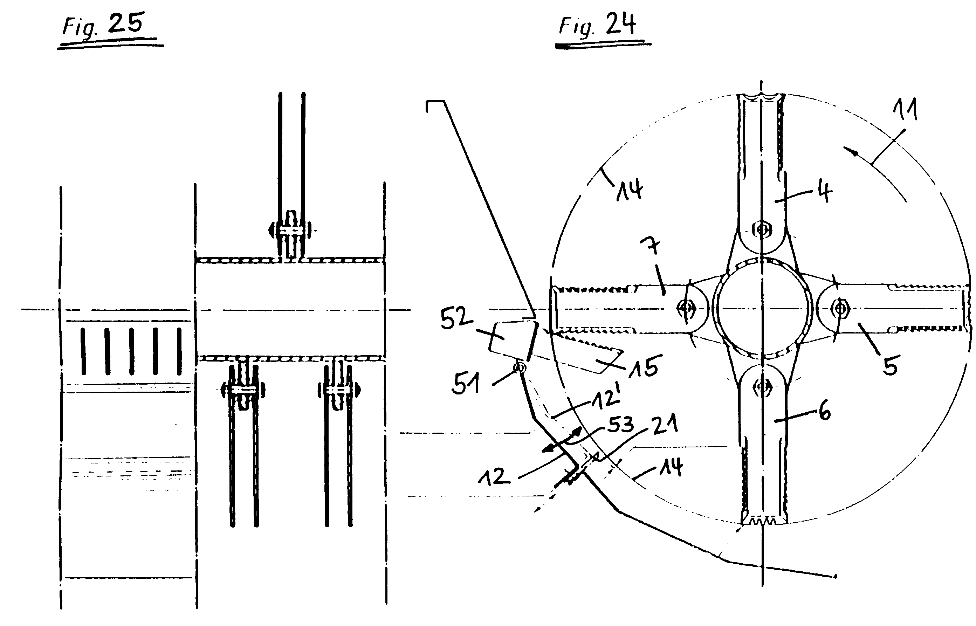

Bei dem in den Fig. 24 und 25 gezeigten Ausführungsbeispiel ist das Führungsblech 12 in Trommel-Drehrichtung 11 hinter den Gegenmessern 15 schwenkbar angeordnet. Der Schwenkpunkt 51 befindet sich unmittelbar hinter bzw. unter dem die Gegenmesser 15 haltenden Messerkasten 52. Die Schwenkbarkeit des Führungsblechs 12 ist durch den Doppelpfeil 53 angedeutet. Die eingeschwenkte Lage des Führungsblechs 12 ist gestrichelt 12′ dargestellt. In der eingeschwenkten Stellung 12′ verläuft das Führungsblech 12 in Trommel-Drehrichtung 11 hinter den Gegenmessern 15 und vor der Leiste 21 radial nach innen, so daß das Häckselgut der Leiste 21 und den Messern 4-7 wieder zugeführt wird. Das Führungsblech 12 ist in Drehrichtung 11 hinter dem Gegenmesserkasten 52 im Drehpunkt 51 schwenkbar angeordnet und in beliebigen Stellungen arretierbar, wodurch der Abstand der Leisten 21 zur Rotationsbahn 14 der Messer 4-7 verstellt werden kann. Das Führungsblech 12 ist demnach hinter dem Gegenmesserkasten 52 so ausgebildet, daß das Häckselgut der Leiste 21 und den Messern 4-7 wieder zugeführt wird, um noch weiter zerkleinert zu werden.

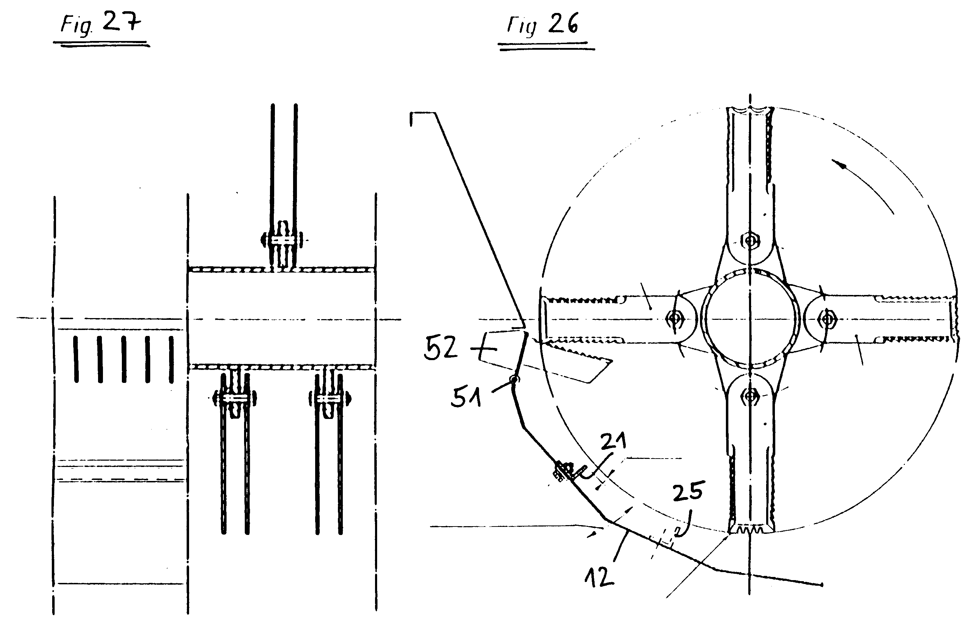

Die Fig. 26 und 27 zeigen ein Ausführungsbeispiel, bei dem auf dem Führungsblech 12 zwei Leisten 21, 25 im Abstand voneinander angeordnet sind und bei dem das Führungsblech 12 um einen unmittelbar hinter dem Messerkasten 52 liegenden Schwenkpunkt 51 verschwenkt werden kann.

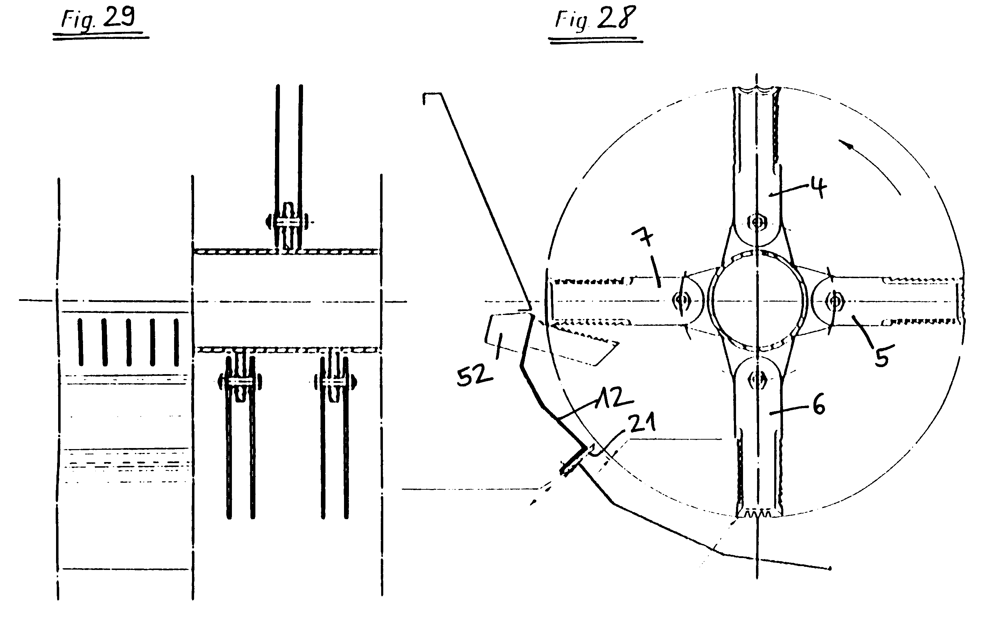

Bei dem in den Fig. 28 und 29 gezeigten Ausführungsbeispiel ist das Führungsblech 12 hinter dem Gegenmesserkasten 52 so ausgebildet, daß das Häckselgut der Leiste 21 und den Messern 4, 5, 6, 7 zum Zwecke der weiteren Zerkleinerung wieder zugeführt wird.

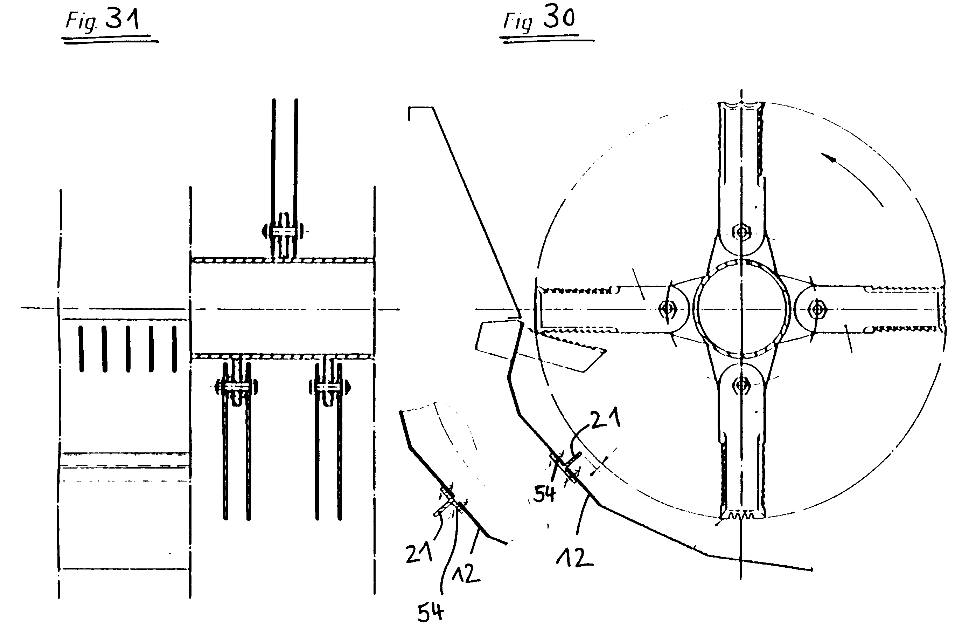

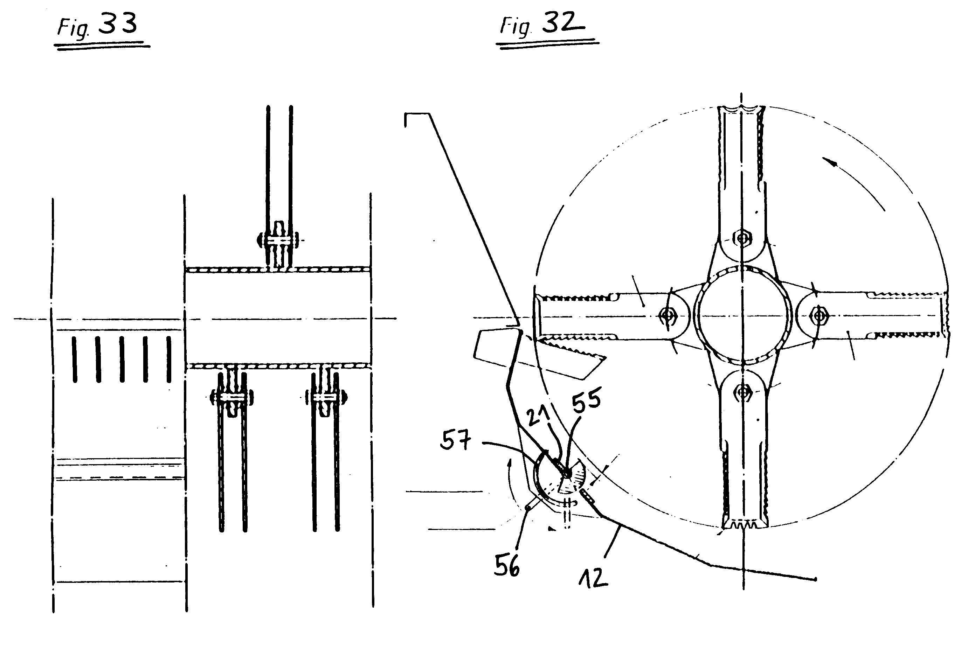

Die Fig. 30 und 31 zeigen ein Ausführungsbeispiel, bei dem die Leiste 21 aus einem das Führungsblech 12 durchsetzenden T-Profil besteht. Durch die in den Schneidraum hineinragende Leiste 21 kann Stroh gerichtet und zerkleinert werden. Durch Umdrehen des T-Profiles deckt der Flansch 54 dieses T-Profils den Durchbruch in dem Führungsblech ab.

In den Fig. 32 und 33 ist ein Ausführungsbeispiel gezeigt, bei dem die Leiste 21 schwenkbar ist. Die Schwenkachse 55 liegt auf dem Führungsblech 12. Die Verschwenkung erfolgt durch einen mit der Leiste 21 verbundenen Hebel 56, der in einem kreisförmigen Langloch 57 geführt und arretierbar ist. Hierdurch kann die Leiste 51 über einen weiten Winkelbereich verstellt werden.

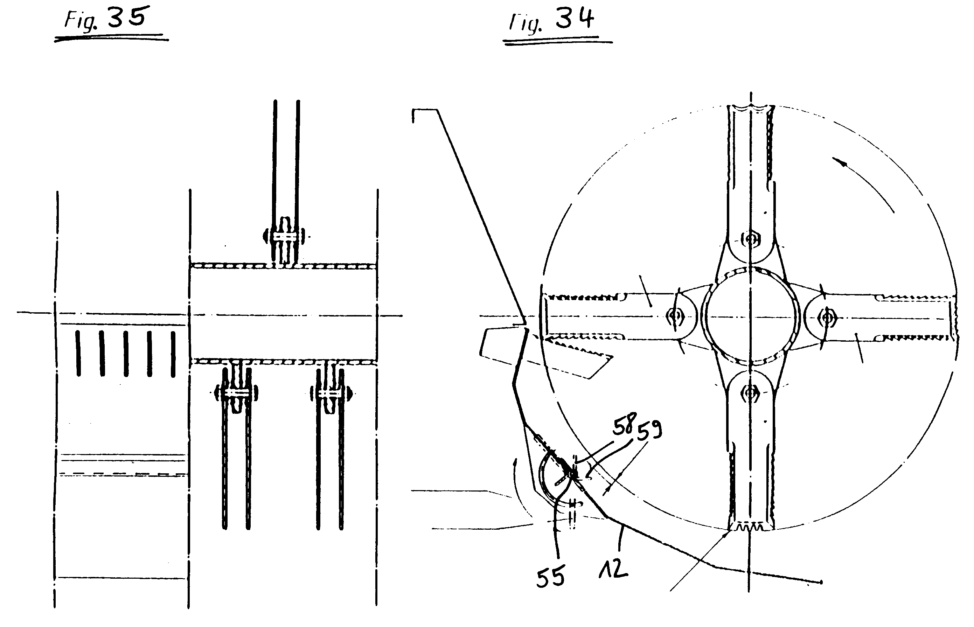

In den Fig. 34 und 35 ist ein Ausführungsbeispiel dargestellt, bei dem die Leiste 21 ebenfalls um einen auf dem Führungsblech 12 liegenden Schwenkpunkt 55 verschwenkbar und arretierbar ist. Die Leiste 21 besteht aus einem Winkelprofil mit zwei rechtwinklig zueinander verlaufenden Schenkeln 58, 59.

## Patentansprüche

1. Häcksler, insbesondere Anbauhäcksler für Mähdrescher,
mit einer Trommel (1) bestehend aus einer um eine im wesentlichen horizontale Achse (3) rotierenden Messerwelle (2), an deren Umfang eine Vielzahl von Messern (4,5,6,7) schwenkbar (8) angeordnet ist, die an ihrer Längsseite (9) eine Schneide aufweisen,
mit einer Einzugsöffnung (10) und einem in Trommel-Drehrichtung (11) daran anschließenden, im wesentlichen parallel und im Abstand vom Messer-Umlaufkreis (14) angeordneten Führungsblech (12)
und mit in Trommel-Drehrichtung (11) hinter der Einzugsöffnung (10) angeordneten, feststehenden Gegenmessern (15),
**dadurch gekennzeichnet**,
daß die Messer (4,5,6,7) auch an ihrer Stirnseite (17,18,19,20) schneidenförmig gestaltet sind,
wobei die Messer (5, 6) an der Stirnseite (18, 19) gezahnt (29; 35, 36, 37) sind.

2. Häcksler nach Anspruch 1, dadurch gekennzeichnet, daß an dem Führungsblech (12) in Trommel-Drehrichtung (11) hinter den Gegenmessern (15) mindestens eine nach innen weisende Leiste (21) vorgesehen ist.

3. Häcksler nach Anspruch 2, dadurch gekennzeichnet, daß im Abstand von der ersten Leiste (21) eine weitere Leiste (25) vorgesehen ist.

4. Häcksler nach Anspruch 2 oder 3 dadurch gekennzeichnet, daß die Leisten (21,25) aus einem Winkelprofil oder aus einem Längsprofil bestehen.

5. Häcksler nach einem der Ansprüche 2 bis 4, dadurch gekennzeichnet, daß die Leisten zustellbar (22,23) sind.

6. Häcksler nach einem der Ansprüche 2 bis 5, dadurch gekennzeichnet, daß die Leisten (21,25) in einem geringen Abstand vom Messerkreis (14) enden.

7. Häcksler nach einem der Ansprüche 2 bis 5, dadurch gekennzeichnet, daß die Leisten (21,25) in den Messerkreis (14) hineinragen und bei den Rotationsebenen (26) der Messer (6) Ausnenmungen (27) aufweisen.

8. Häcksler nach einem der vorhergehenden Ansprüche, dadurch gekennzeichnet, daß die Kanten (31,33) der Zähne (29) in verschiedenem Winkel (32) zur Messer-Längsachse (30) verlaufen.

9. Häcksler nach Anspruch 8, dadurch gekennzeichnet, daß der Winkel (32) der vorlaufenden Kanten (31) der Zähne (29) größer ist als der Winkel der nachlaufenden Kanten (33).

10. Häcksler nach Anspruch 9, dadurch gekennzeichnet, daß die nachlaufenden Kanten (33) parallel zur Messer-Längsachse (30) verlaufen.

11. Häcksler nach einem der vorhergehenden Ansprüche, dadurch gekennzeichnet, daß die Zähne (35,36,37) symmetrisch zur Messer-Längsachse (30) angeordnet sind und daß der Winkel der inneren Kanten (38) der Zähne zur Messer-Längsachse (30) größer ist als der Winkel der äußeren Kanten (39) (Fig.15-18).

12. Häcksler nach einem der vorhergehenden Ansprüche, dadurch gekennzeichnet, daß an den Stirnseiten (17) der Messer (4) halbmondförmige Ausnehmungen (42) eingeschliffen sind.

13. Häcksler nach einem der Ansprüche 2 bis 12, dadurch gekennzeichnet, daß die Leiste (21) bzw. Leisten (21, 25) verzahnt sind.

14. Häcksler nach einem der Ansprüche 2 bis 13, dadurch gekennzeichnet, daß die Leiste (21) bzw. die Leisten (21, 25) schwenkbar sind.

15. Häcksler nach einem der Ansprüche 2 bis 14, dadurch gekennzeichnet, daß die Leiste (21) bzw. die Leisten (21, 25) aus einem das Führungsblech (12) durchsetzenden T-Profil bestehen.

16. Häcksler nach einem der vorhergehenden Ansprüche, dadurch gekennzeichnet, daß das Führungsblech (12) in Trommel-Drehrichtung (11) hinter den Gegenmessern (15) schwenkbar (51) angeordnet ist.

17. Häcksler nach einem der Ansprüche 2 bis 16, dadurch gekennzeichnet, daß das Führungsblech (12) in Trommel-Drehrichtung (11) hinter den Gegenmessern (15) und vor der Leiste (21) radial nach innen verläuft, so daß das Häckselgut der Leiste (21) und den Messern (4, 5, 6, 7) wieder zugeführt wird.

## Claims

1. Chopper, in particular a chopper attachment for combine harvesters,
with a drum assembly (1) comprising a knife shaft (2) rotating around an essentially horizontal axis (3), at the periphery of which knife shaft (2) are mounted on pivots (8) a number of knives (4, 5, 6, 7) which exhibit a cutting edge along their longitudinal sides (9),
with an intake opening (10) and a downstream guide plate (12) extending in the direction of drum rotation (11), said guide plate (12) being arranged essentially parallel to and at a distance from the knife pitch circle (14),
and with fixed counter-knives (15) arranged downstream of the intake opening (10) as seen in the direction of drum rotation (11),
**characterised in that**
the knives (4, 5, 6, 7) are also shaped to a cutting edge at their end face (17, 18, 19, 20),
knives (5, 6) being serrated (29; 35, 36, 37) at their end face (18, 19).

2. Chopper in accordance with Claim 1, characterised in that, at the guide plate (12) downstream of the counter-knives (15) as seen in the direction of drum rotation (11) is provided at least one inward-facing projection (21).

3. Chopper in accordance with Claim 2, characterised in that, at a distance from the first projection (21), a further projection (25) is provided.

4. Chopper according to Claim 2 or 3, characterised in that the projections (21, 25) consist of an angle section or a longitudinal section.

5. Chopper according to one of Claims 2 to 4, characterised in that the projections are position-adjustable (22, 23).

6. Chopper according to one of Claims 2 to 5, characterised in that the projections (21, 25) terminate a short distance from the knife pitch circle (14).

7. Chopper according to one of Claims 2 to 5, characterised in that the projections (21, 25) extend into the knife pitch circle (14) and exhibit recesses (27) at the rotation planes (26) of the knives (6).

8. Chopper according to one of the preceding claims, characterised in that the edges (31, 33) of the serrations (29) run at a distinct angle (32) to the knife longitudinal axis (30).

9. Chopper according to Claim 8, characterised in that the angle (32) of the leading edges (31) of the serrations (29) is greater than the angle of the trailing edges (33).

10. Chopper according to Claim 9, characterised in that the trailing edges (33) run parallel to the knife longitudinal axis (30).

11. Chopper according to one of the preceding claims, characterised in that the serrations (35, 36, 37) are arranged symmetrical to the knife longitudinal axis (30), and that the angle of the inner edges (38) of the serrations to the knife longitudinal axis (30) is greater than the angle of the outer edges (39) (Fig. 15 - 18).

12. Chopper according to one of the preceding claims, characterised in that crescent-shaped recesses (42) are ground into the end faces (17) of the knives (4).

13. Chopper according to one of Claims 2 to 12, characterised in that the projection (21) or projections (21, 25) are serrated.

14. Chopper according to one of Claims 2 to 13, characterised in that the projection (21) or projections (21, 25) are pivoted.

15. Chopper according to one of Claims 2 to 14, characterised in that the projection (21) or projections (21, 25) consist of a T-section passing through the guide plate (12).

16. Chopper according to one of the preceding claims, characterised in that the guide plate (12) is mounted on a pivot (51) located downstream of the counter-knives (15) as seen in the direction of drum rotation (11).

17. Chopper according to one of Claims 2 to 16, characterised in that the guide plate (12) extends radially inward downstream of the counter-knives (15) and upstream of the projection (21) as seen in the direction of drum rotation (11), so that the chopping stock is again fed to the projection (21) and the knives (4, 5, 6, 7).

## Revendications

1. Hachoir, notamment hachoir à monter sur des moissonneuses-batteuses,
comportant un tambour (1) consistant en un arbre à couteaux (2) tournant autour d'un axe (3) essentiellement horizontal, sur la périphérie duquel une pluralité de couteaux (4, 5, 6, 7) est disposée de manière à pouvoir pivoter (8), qui présentent sur leur côté longitudinal (9) une lame,
une ouverture d'alimentation (10) et une tôle de guidage (12) lui succédant en direction de rotation du tambour (11) et disposée essentiellement en parallèle et à distance du cercle de rotation des couteaux (14)
ainsi que des contre-couteaux (15) fixes disposés en aval, en direction de rotation du tambour (11), de l'ouverture d'alimentation (10),
caractérisé en ce que
les couteaux (4, 5, 6, 7) ont également sur leurs face frontale (17, 18, 19, 20) une forme de lame,
les couteaux (5, 6) étant dentelés (29; 35, 36, 37) sur la face frontale (18, 19).

2. Hachoir selon la revendication 1, caractérisé en ce qu'une barre (21) au moins est prévue sur la tôle de guidage (12) en aval des contre-couteaux (15) en direction de rotation du tambour (11).

3. Hachoir selon la revendication 2, caractérisé en ce qu'à distance de la première barre (21) une barre supplémentaire (25) est prévue.

4. Hachoir selon les revendications 2 ou 3, caractérisé en ce que les barres (21, 25) consistent en un profilé angulaire ou en un profilé longitudinal.

5. Hachoir selon l'une quelconque des revendications 2 à 5, caractérisé en ce que les barres peuvent être ajustées dans leur position (22, 23).

6. Hachoir selon l'une quelconque des revendications 2 à 5, caractérisé en ce que les barres (21, 25) terminent à faible distance du cercle de couteaux (14).

7. Hachoir selon l'une quelconque des revendications 2 à 5, caractérisé en ce que les barres (21, 25) pénètrent dans le cercle de couteaux (14) et présentent des échancrures (27) au niveau des plans de rotation (26) des couteaux (6).

8. Hachoir selon l'une quelconque des revendications précédentes, caractérisé en ce que les arêtes (31, 33) des dents (29) s'étendent à angles divers (32) par rapport à l'axe longitudinal des couteaux (30).

9. Hachoir selon la revendication 8, caractérisé en ce que l'angle (32) des arêtes en aval (31) des dents (29) est supérieur à l'angle des arêtes en amont (33).

10. Hachoir selon la revendication 9, caractérisé en ce que les arêtes en amont (33) s'étendent parallèlement à l'axe longitudinal des couteaux (30).

11. Hachoir selon l'une quelconque des revendications précédentes, caractérisé en ce que les dents (35, 36, 37) sont disposées symétriquement par rapport à l'axe longitudinal des couteaux (30), et que l'angle des arêtes intérieurs (38) des dents est supérieur par rapport à l'axe longitudinal des couteaux (30) que l'angle des arêtes extérieures (39) (fig. 15-18).

12. Hachoir selon l'une quelconque des revendications précédentes, caractérisé en ce que des échancrures (42) en forme de demi-lune sont rodées sur les faces frontales (17) des couteaux.

13. Hachoir selon l'une quelconque des revendications 2 à 12, caractérisé en ce que la barre (21) ou les barres (21, 25) sont dentelées.

14. Hachoir selon l'une quelconque des revendications 2 à 13, caractérisé en ce que la barre (21) ou les barres (21, 25) peuvent être pivotées.

15. Hachoir selon l'une quelconque des revendications 2 à 14, caractérisé en ce que la barre (21) ou les barres (21, 25) consistent en un profilé en T traversant la tôle de guidage (12).

16. Hachoir selon l'une quelconque des revendications précédentes, caractérisé en ce que la tôle de guidage (12) est disposée de manière à pouvoir pivoter (51) en direction du pivotement du tambour (11) en aval des contre-couteaux (15).

17. Hachoir selon l'une quelconque des revendications 2 à 16, caractérisé en ce que la tôle de guidage (12) s'étend radialement vers l'intérieur en direction du pivotement du tambour (11) en aval des contre-couteaux (15) et en amont de la barre (21) de manière à ce que le produit haché est ramené à la barre (21) et aux couteaux (4, 5, 6, 7).
